Europäisches Patentamt

European Patent Office

Office européen des brevets

(11) Veröffentlichungsnummer: **0 224 169 B1**

## EUROPÄISCHE PATENTSCHRIFT

(45) Veröffentlichungstag der Patentschrift: **18.09.91**

(21) Anmeldenummer: **86115929.1**

(22) Anmeldetag: **17.11.86**

(51) Int. Cl.⁵: **C08F 214/06**, C08F 2/22,
//(C08F214/06,210:02)

Die Akte enthält technische Angaben, die nach dem Eingang der Anmeldung eingereicht wurden und die nicht in dieser Patentschrift enthalten sind.

(54) **Feinteilige, schutzkolloidstabilisierte Vinylchlorid-Ethylen-Copolymerdispersionen, Verfahren zu ihrer Herstellung und ihre Verwendung.**

(30) Priorität: **21.11.85 DE 3541226**

(43) Veröffentlichungstag der Anmeldung:
**03.06.87 Patentblatt 87/23**

(45) Bekanntmachung des Hinweises auf die Patenterteilung:
**18.09.91 Patentblatt 91/38**

(84) Benannte Vertragsstaaten:
**BE DE FR GB IT NL SE**

(56) Entgegenhaltungen:
**EP-A- 0 076 511**
**EP-A- 0 099 463**
**DE-B- 1 520 849**

(73) Patentinhaber: **WACKER-CHEMIE GMBH**
**Prinzregentenstrasse 22**
**W-8000 München 22(DE)**

(72) Erfinder: **Selig, Manfred, Dr.**
**Regerstrasse 85**
**W-8263 Burghausen(DE)**
Erfinder: **Ball, Peter, Dr.**
**Ketteler Strasse 11**
**W-8261 Emmerting(DE)**
Erfinder: **Hannebaum, Manfred**
**Immanuel-Kant-Strasse 49 a**
**W-8263 Burghausen(DE)**
Erfinder: **Schulze, Joachim, Dr.**
**Rudolf-Diesel-Strasse 2**
**W-8263 Burghausen(DE)**
Erfinder: **Marquardt, Klaus, Dr.**
**Lindacher Strasse 77**
**W-8263 Burghausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 224 169 B1

## Beschreibung

Die vorliegende Erfindung betrifft eine feinteilige, nicht flockulierte, monomodale, schutzkolloidstabilisierte Polymerdispersion von Copolymerisaten des Vinylchlorids, des Ethylens und gegebenenfalls weiteren damit copolymerisierbaren ethylenisch ungesättigten Monomeren mit mindestens 45 Gew.-% Festgehalt sowie ein verbessertes Verfahren zur Herstellung von durch Schutzkolloid - insbesondere durch Polyvinylalkohol (PVOH oder PVAL) - stabilisierten, wäßrigen Polymerdispersionen durch einstufige radikalische Emulsions-Copolymerisation von Vinylchlorid, Ethylen und gegebenenfalls weiteren Monomeren, z.B. Vinylestern.

Feinteilige, wäßrige Polymerdispersionen von Copolymeren aus Vinylhalogenid-, Ethylen- und ggf. weiteren Comonomereinheiten sind prinzipiell bekannt, nicht jedoch feinteilige, nicht flockulierte, monomodale schutzkolloidstabilisierte Polymerdispersionen, bevorzugt polyvinylalkoholstabilisierte Dispersionen mit einem Grundharz, das zu mindestens 75 Gew.-%, bevorzugt mindestens 85 Gew.-%, aus Vinylchlorid- und Ethylen -Einheiten besteht. Von besonderer Bedeutung für viele Anwendungen von Dispersionen ist neben der Feinteiligkeit die Abwesenheit von flockulierten Aggregaten. Das Fehlen von flockulierten Aggregaten kann dabei in eindeutiger Weise durch die Disc-Zentrifuge festgestellt werden, wohingegen elektronenmikroskopische Aufnahmen dafür untauglich sind.

Ebenso ist die Herstellung wäßriger Dispersionen von Copolymeren aus den oben genannten Monomeren durch Emulsionspolymerisation prinzipiell bekannt. Die zur Stabilisierung solcher Dispersionen notwendigen Stoffe wie Emulgator und/oder Schutzkolloid werden dabei im allgemeinen vorgelegt (vgl. EP-B-590 & US-A-41 89 415, DE-B-11 80 133 & GB-A-13 56 143 und DE-A-17 70 395 & US-A-38 16 363). Dem Fachmann sind jedoch auch Verfahren bekannt, bei denen die Polymerisation in Abwesenheit von Emulgator oder Schutzkolloid beginnt, und diese Stoffe ebenso wie ein Teil der Monomeren erst im Verlauf der Polymerisation zugesetzt werden (DE-B-15 20 849 & GB-A-991 536 und DE-A-28 37 992 & US-A-42 47 438 sowie DE-A-32 27 090 & US-A-45 28 315).

Alle diese vorgeschlagenen Verfahren besitzen jedoch den Nachteil, daß der Beginn der Reaktion ebenso wie der rechtzeitige Beginn der verschiedenen Dosierungen unter praktischen Bedingungen oft nur schwer kontrollierbar ist. Daraus ergeben sich mannigfaltige Probleme bei der Einhaltung wichtiger anwendungstechnischer Qualitätsanforderungen. Als Beispiele seien die Verträglichkeit mit Zement, das Verhalten des Polymerfilms in Wasser, der Siebrückstand bzw. der Grobanteil der Dispersionen und andere durch die Teilchengröße bzw. die Teilchengrößenverteilung gesteuerte Eigenschaften wie Viskosität und Scherstabilität genannt.

Ein weiterer, bei den oben genannten Verfahren häufiger Mangel besteht in den relativ langen Polymerisationszeiten. So liegt die durchschnittliche Polymerisationszeit der in DE-A-3227090 offengelegten Verfahrensbeispiele für Druckdispersionen bei mehr als 14 h. Dabei kann diese Schrift bereits "kurze" Polymerisationszeiten als Verfahrensvorteil beanspruchen. Die typische Polymerisationszeit des hier vorgeschlagenen Verfahrens liegt dagegen bei 7 - 8 h.

Hervorzuheben sind des weiteren die bei dem hier beanspruchten Verfahren sehr kurzen und reproduzierbaren Inhibitionszeiten von üblicherweise 3 - 4 Minuten und längstens 5 Minuten, d. h. die Periode von der Zugabe des Initiators bzw. vom Beginn der Radikalbildung bis zum Beginn der eigentlichen Polymerisationsreaktion, der z. B. durch Verunreinigungen des Schutzkolloids, des Emulgators, der Monomeren und durch andere Radikalfänger in der Reaktionsmischung verzögert werden kann. Vergleichsansätze, die nach den in DE-A-3227090 vorgeschlagenen Maßnahmen durchgeführt werden, starten dagegen mit stark schwankenden Inhibitionszeiten. Der richtige Zeitpunkt des Einfahrens der Schutzkolloiddosierung bzw. der Monomerdosierung wird dadurch sehr schwer zu bestimmen. Dies führt zu starken Schwankungen in der Qualität des Endproduktes (vgl. die mit A bezeichneten Beispiele). Insbesondere wirken sich solche Schwankungen im industriellen Betriebsmaßstab negativ aus. Obwohl das in der DE-A- beanspruchte Verfahren im Vergleich zu herkömmlichen Herstellungsverfahren bereits wesentliche Vorteile bietet, sind dem Fachmann die Mängel des in der DE-A-3227090 offengelegten Verfahrens wegen der dort geforderten Abwesenheit von Emulgatoren und/oder Schutzkolloid zu Polymerisationsbeginn unmittelbar einsichtig (z. B. bei Einsatzmengen von mehreren Tonnen an Monomeren). Die mit A bezeichneten Beispiele verdeutlichen die zu erwartenden Schwierigkeiten dieses Verfahrens - das für spezielle, wissenschaftliche Untersuchungen im Liter-Maßstab durchaus sinnvoll ist - bei der Anwendung in großtechnischem Maßstab.

Im Vergleich zur DE-A-3227090 das andere Extrem in bezug auf die Vorlage von Schutzkolloid und Emulgator stellen übliche Polymerisationsverfahren für schutzkolloidstabilisierte Dispersionen dar. In allen diesen Verfahren wird meist zumindest ein größerer Teil der Monomeren u. des Schutzkolloids oder sogar das gesamte Schutzkolloid vorgelegt. Hier treten zum einen für die hier beanspruchten Dispersionen auf der Basis von Vinylchlorid/Ethylen-Copolymeren ebenfalls die dem Fachmann bekannten langen und schwan-

2

kenden Inhibitionsperioden auf, zum anderen wird nach erfolgtem Reaktionsbeginn selbst bei sorgfältiger Beachtung aller üblicherweise kontrollierbaren Randbedingungen die Reaktionsführung schwierig.

Während ein Teil solcher Ansätze durchaus stabile, allerdings keine feinteiligen Dispersionen im Sinne der hier beanspruchten Erfindung erhalten werden können, die auch hinsichtlich der Verarbeitungsparameter, wie z. B. Viskositat befriedigen, ergibt der andere, häufig der überwiegende Teil trotz gleicher Rezeptur und gleicher Verfahrensparameter völlig unbefriedigende Ergebnisse, z.B. streuen wichtiger Parameter, wie z.B. die Viskosität in unkontrollierbarer Weise, z.B. werden die Dispersionen stark dilatant, oder koagulieren gar.

So sind nach den bisherigen Verfahren Dispersionen auf der Grundlage der hier beanspruchten Hauptmonomerbasis Vinylchlorid und Ethylen zwar prinzipiell herstellbar, jedoch fehlt es diesen Produkten in nahezu allen Fällen an elementaren Voraussetzungen für eine technische Nutzung, da sie das geforderte Eigenschaftsbild nicht erfüllen. Auch ist vielfach der Grobanteil bzw. der Siebrückstand der Dispersion zu hoch, und sie sind unter Betriebsbedingungen nicht mit der notwendigen Sicherheit in gleichmäßiger Qualität zu produzieren.

Diese dem Fachmann wohlbekannten Zusammenhänge sind eine der wesentlichen Ursachen dafür, daß bislang schutzkolloidstabilisierte, insbesondere PVOH-stabilisierte Kunststoffdispersionen auf der Basis von Vinylchlorid und Ethylen trotz ihres technisch interessanten Eigenschaftsspektrums und ihrer kostengünstigen Rohstoffsituation kaum auf dem Markt anzutreffen sind.

Diese Mängel können überraschend gut durch die durch die Ansprüche gekennzeichnete Dispersion und durch das in den Ansprüchen charakterisierte Verfahren gelöst werden. Es werden erfindungsgemäß schutzkolloidstabilisierte Dispersionen auf der Basis von Vinylchlorid und Ethylen mit niedrigem Siebrückstand erhalten, die auch in technischen Größenordnungen das geforderte Eigenschaftsbild zeigen und sich durch eine sehr gleichmäßige Produktqualität auszeichnen. Ein weiterer Vorteil des bevorzugten erfindungsgemäßen Verfahrens liegt in den kurzen Inhibitions- und Polymerisationszeiten sowie in der sehr guten Kontrolle der Reaktionsbedingungen.

Gegenstand der Erfindung ist eine feinteilige monomodale schutzkolloidstabilisierte wäßrige Dispersion eines Polymerisats aus mindestens 75 Gew.-% Einheiten des Vinylchlorids und des Ethylens und höchstens 25 Gew.-% Einheiten weiterer damit copolymerisierbarer ethylenisch ungesättigter Monomeren mit einem Festgehalt von 45 - 70 Gew.-%, die dadurch gekennzeichnet ist, daß sie nicht flockuliert ist, daß das Polymer eine mittlere Teilchengröße, gemessen als Gewichtsmittel in der Disc-Zentrifuge, von 150 nm bis 500 nm und einen Polydispersitätsindex von höchstens 1,8 besitzt und daß weniger als 50 Gew.-% der Polymerteilchen größer als 1000 nm sind.

Unter feinteilig werden im folgenden solche Dispersionen verstanden, deren mittlere Teilchengröße (Durchmesser) gemessen als Gewichtsmittel in der Disc-Zentrifuge, mindestens 150 nm und höchstens 500 nm, vorzugsweise höchstens 400 nm und besonders bevorzugt höchstens 350 nm ist. Als monomodal werden hier Dispersionen bezeichnet, die ein Maximum in der Teilchengrößenverteilung besitzen.u.deren Polydispersitätsfaktor höchstens 1,8 beträgt.

Bei der Disc- oder Scheibenzentrifuge handelt es sich um ein analytisches Gerät zur Bestimmung der Teilchengrößenverteilung sehr kleiner Teilchen, wie es z. B. von der Firma Joyce Loebl Ltd. Princesway, I.V.T.E., Gateshead NE 11 OUJ, England (GB) hergestellt und vertrieben wird. Diese Methode nutzt die starken Kräfte im Zentrifugalfeld eines sehr schnell rotierenden und mit der Probenflüssigkeit gefüllten scheibenähnlichen Hohlzylinders. Die Wirkungsweise und Auswertung der Disc-Zentrifuge wird in den Bedienungsanleitungen und Anwendungsberichten der Firma Joyce Loebl ausführlich beschrieben.

Es handelt sich bei der Disc-Zentrifuge um eine eingeführte und weitverbreitete Technik zur Bestimmung der Teilchengrößenverteilung von in Flüssigkeiten dispergierten Teilchen (vgl. die Literaturliste 1 - 5). Die Disc-Zentrifuge erfaßt dabei den hydrodynamischen Radius der Teilchen im dispergierten Zustand im Fluid und gibt damit eindeutig Auskunft über eventuelle Assoziate und Flockulate von Einzelteilchen. Dispersionen gleicher Bruttozusammensetzung können kolloidchemisch völlig verschieden aufgebaut sein (vgl. z. B. Literaturstelle 6). Ein wichtiger Gesichtspunkt ist dabei die Ausbildung von Flockulatstrukturen bzw. deren Abwesenheit. Dieser kolloidchemische Aufbau steuert wesentlich viele wichtige anwendungstechnische Eigenschaften von Dispersionen, wie Viskosität, Bindekraft und Naßabriebsfestigkeit, um nur einige zu nennen. Diese strukturellen Unterschiede machen scheinbar "gleiche" Dispersionen zu jeweils genau spezifizierbaren, eigenständigen Stoffsystemen. Bisher bekannte schutzkolloidstabilisierte Polyvinylesterdispersionen sind typischerweise mittel- bis grobdispers und enthalten das Polymere im dispergierten Zustand überwiegend als Flockulate.

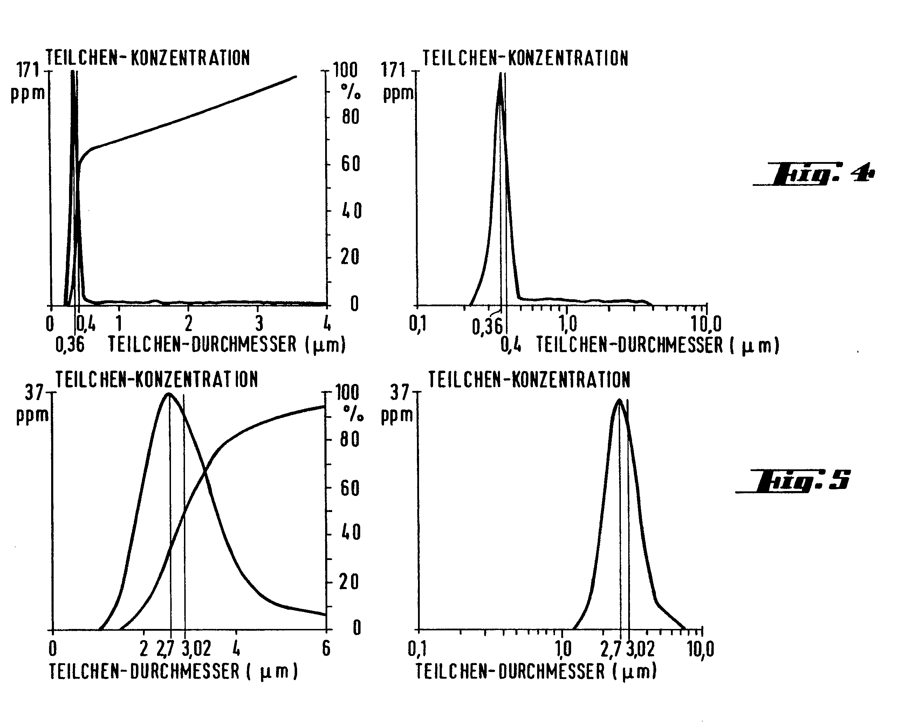

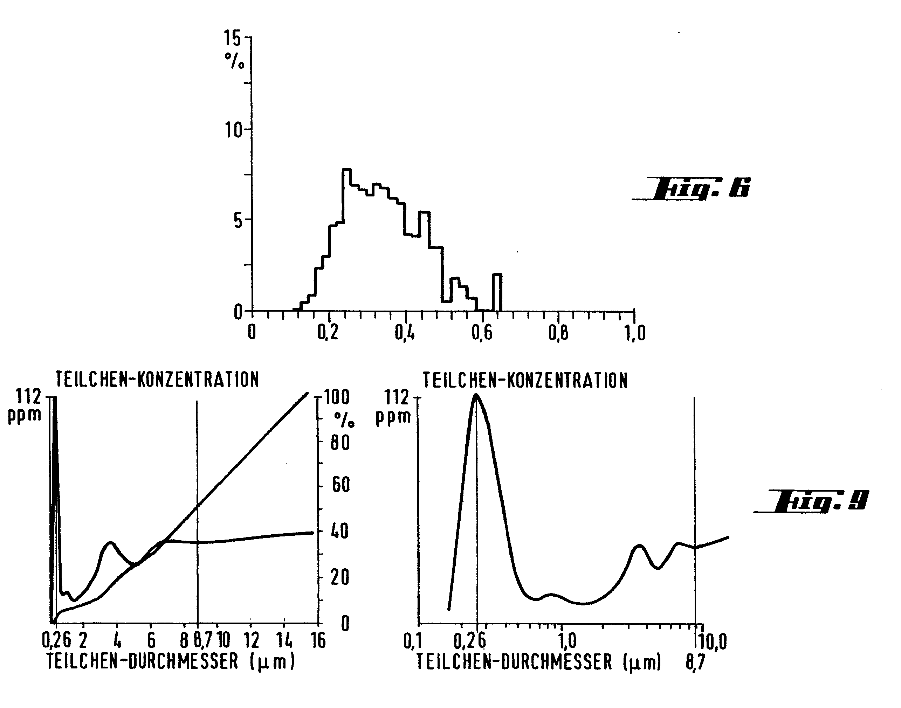

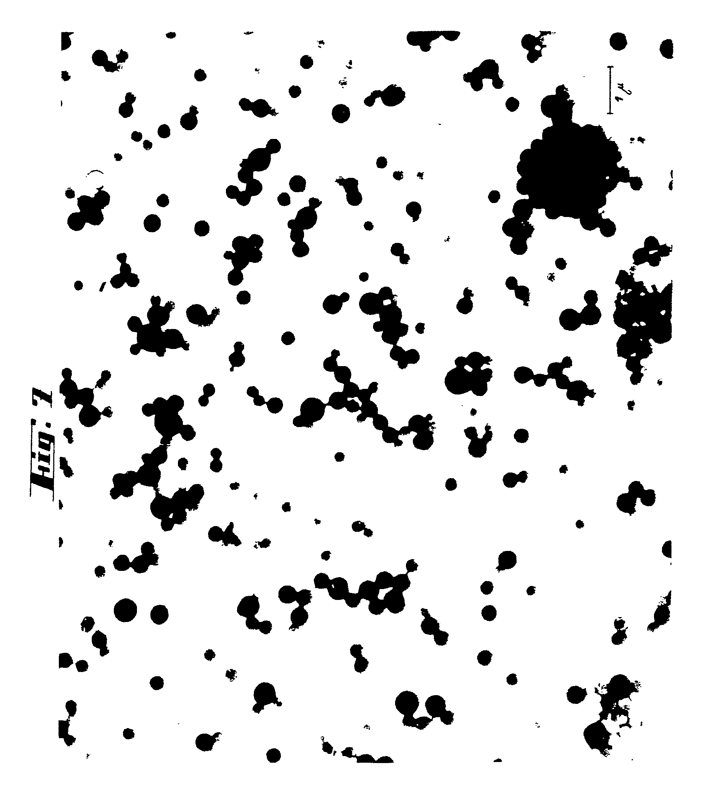

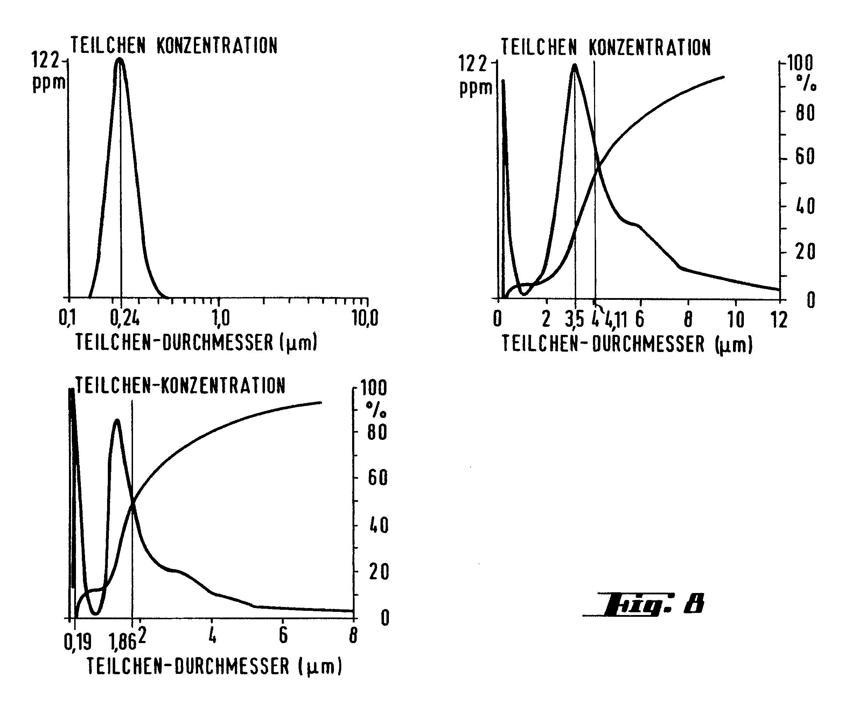

Elektronenmikroskopische Aufnahmen sind ungeeignet, denn dabei handelt es sich stets um im Ultrahochvakuum getrocknete Proben, die über den Flockulationsgrad im dispergierten Zustand naturgemäß keine Aussage erlauben. Die Figuren 5, 6 und 7 verdeutlichen diese Zusammenhänge in plastischer Weise:

3

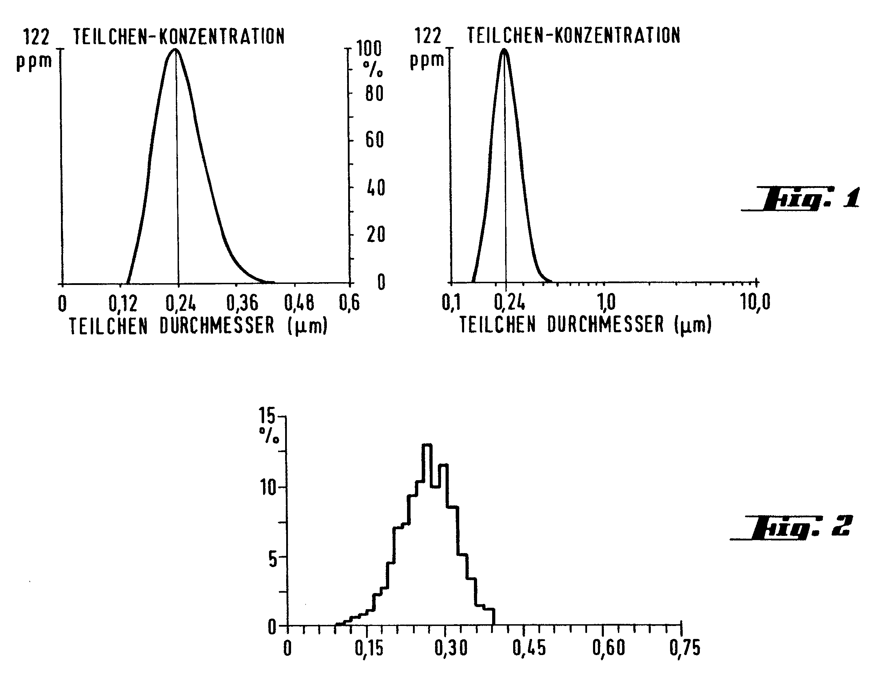

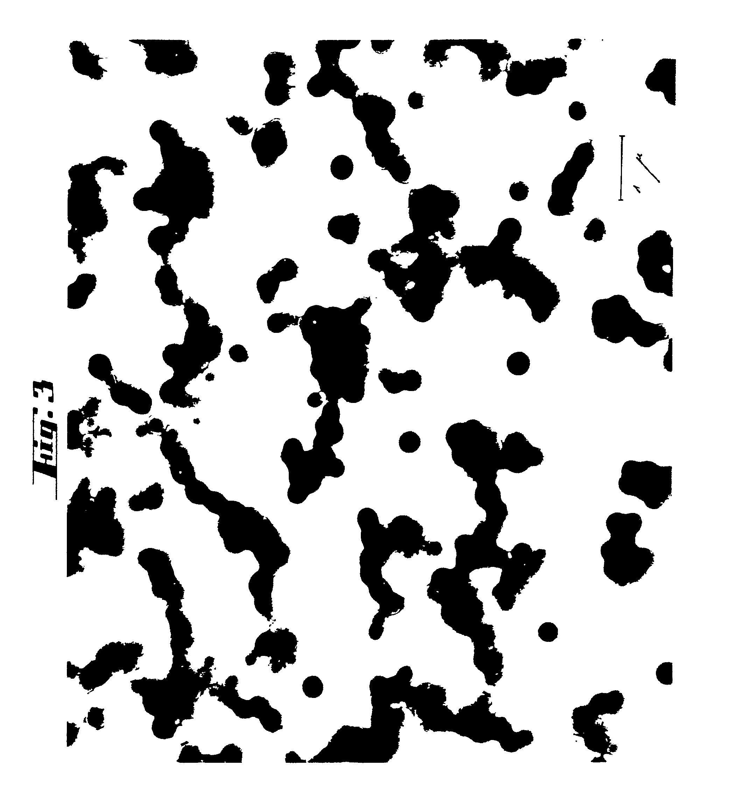

Während die Elektronenmikroskop-Aufnahme der Probe die einzelnen Teilchen mit ca. 0,3 μm ausweist, zeigt die Auswertung der Disc-Zentrifugenaufnahme, daß die Dispersion selbst tatsächlich fast vollständig flockuliert ist (mit Teilchengrößen um 3 μm). Deshalb sind elektronenmikroskopische Aufnahme (EM-Aufnahmen) für die Beschreibung von Flockulatzuständen nicht nur nicht brauchbar, sondern geben häufig sogar Anlaß zu Mißdeutungen (vgl. die EM-Aufnahmen, Fig. 2 und 3 bzw. 6 und 7 mit den zugehörigen Disc-Auswertungen Fig. 1 bzw. 5).

Unter "frei von Flockulaten oder Teilflockulaten" wird im folgenden eine Summenverteilung der Teilchengröße in der Disc-Zentrifuge verstanden, bei der weniger als 50 Gew.-%, bevorzugt weniger als 20 Gew.-%, der Teilchen größer als 1000 nm sind. Vorzugsweise liegt dies Teilchengrößengrenze bei höchstens 700 nm, insbesondere bei höchstens 500 nm.

Figur 1 erläutert diese Zusammenhänge graphisch. Diese auf den ersten Blick hohen Werte für die Zulässigkeit "grober Teilchen" resultieren aus der Tatsache, daß in der Summenverteilung der Teilchengewichte schon winzige Gehalte an Grobanteil die Summenverteilung sehr stark verschieben, obwohl der Anteil zahlenmäßig so gering ist, daß er tatsächlich vernachlässigt werden kann. Fig. 4 soll dies verdeutlichen. Als weiteres Maß für die hier beanspruchte Stoffgruppe kann das Verhältnis von Gewichts- und Zahlenmittel (der Polydispersitätsindex) der Disc-Zentrifuge herangezogen werden: es beträgt höchstens 1,8, bevorzugt höchstens 1,5 und besonders bevorzugt höchstens 1,3.

Soweit es sich bei Dispersionen um solche mit monomodalen Teilchengrößenverteilungen handelt, steht mit dem NANO-SIZER® der Firma COULTER ELECTRONICS LTD., Harpenden, Herts, England (GB), ein weiteres, von der Bestimmungsmethode mit der Disc-Zentrifuge unabhängiges Gerät zur Bestimmung der Teilchengröße zur Verfügung; Teilchengrößenverteilungen sind mit dem NANO-SIZER jedoch nicht zugänglich. Bei einem Polydispersitätsfaktor (PD) von mehr als 2 verliert die Angabe eine NANO-SIZER-Teilchengröße ihre Aussagekraft. PD's von > 3 deuten auf auf Flockulate bzw. bimodale Verteilungen hin, ergeben bei der Bestimmung mit dem NANO-SIZER® jedoch einen "Mittelwert" der Teilchengröße, dem dann keine Aussagekraft mehr zukommt.

Die hier beanspruchte Stoffgruppe läßt sich anhand der oben gezeigten Parameter eindeutig charakterisieren. Monomodale, feindisperse, PVOH-stabilisierte Dispersionen unterscheiden sich in ihrem kolloidchemischen Aufbau, z. B. in ihrer inneren Oberfläche und damit in ihrer Natur und ihren Eigenschaften wesentlich von den bekannten, zumindest teilflockulierten Dispersionen gleicher oder ähnlicher Bruttozusammensetzung (vgl. z. B. Fig. 8).

Gegenstand der Erfindung ist weiterhin ein bevorzugtes verbessertes Verfahren zur Herstellung solcher wäßrigen Copolymerdispersionen durch Emulsionspolymerisation von

(a) 1 bis 40 Gew.-% Ehtylen und

(b) 99 bis 60 Gew.-% mindestens eines unter den Reaktionsbedingungen flüssigen Comonomeren

in wäßrigem Medium mittels Rakikalinitiatorsystem in Gegenwart von Schutzkolloid und gegebenenfalls maximal 50 Gew.-%, bevorzugt höchstens 30 Gew.-% und besonders bevorzugt ohne Emulgator (Menge des Emulgators bezogen auf die Gesamtmenge an Schutzkolloid und Emulgator), wobei sich die Comonomerenphases zusammensetzt aus

b 1) 60 bis 100, vorzugsweise mindestens 85, mehr bevorzugt mindestens 95, insbesondere 100 Gew.-% Vinylchlorid,

b 2) 0 bis 40, vorzugsweise zu höchstens 15, mehr bevorzugt zu höchstens 5 Gew.-% ethylenisch ungesättigter, öllöslicher und mit a und b 1 copolymerisierbarer Monomeren, die außer der einen ethylenischen Doppelbindung keine weiteren bei den Reaktionsbedingungen reaktiven funktionellen Gruppen enthalten, und

b 3) 0 bis 10 Gew.-% ethylenisch ungesättigter und funktioneller Monomeren und/oder mehrfach ethylenisch ungesättigter Monomeren.

Das Verfahren ist dadurch gekennzeichnet, daß

I. zusammen mit Wasser und gegebenenfalls mindestens einem Teil üblicher Zusätze, wie z. B. Regler und Puffersubstanzen, Schutzkolloid, höchstens aber 4 Gew.-% bevorzugt, höchstens 2,5 Gew.-%, besonders bevorzugt höchstens 1,2 Gew.-% und insbesondere maximal 0,6 Gew.-%, bezogen auf das Gesamtgewicht der Komponente b, vorzugsweise PVOH, insbesondere ohne jeden Emulgatorzusatz, wobei die vorgelegte Schutzkolloid- und Emulgatormenge vorzugsweise höchstens 40 Gew.-% der verwendeten Gesamtmenge des Schutzkolloids und gegebenenfalls des Emulgators beträgt, und höchstens 10 Gew.-%, bezogen auf das Gesamtgewicht der Komponente b, vorzugsweise höchstens 5 Gew.-% und insbesondere gar kein Comonomer vorgelegt werden,

II. mit der Zugabe der restlichen Menge der Comonomerenkomponente b frühestens gleichzeitig mit dem prinzipiell möglichen Start der Polymerisation begonnen wird, worunter für den Fall einer Redoxinitiierung das Verhandensein von Reduktions- und Oxidationskomponente des Initiatorsystems im Reak-

4

tionsgefäß, für den Fall der thermischen Initiierung das Erreichen einer Innentemperatur im Reaktionsgefäß durch Erwärmung von außen verstanden wird, bei der die Halbwertszeit des Initiators weniger als 10 h, vorzugsweise weniger als 5 h beträgt,

III. mit der Zugabe weiteren Schutzkolloids frühestens gleichzeitig mit und spätestens 60 Minuten nach dem prinzipiell möglichen Start begonnen wird,

IV. bei einem Ethylendruck von 10 bis 150 bar, bevorzugt von 30 bis 80 bar, und Temperaturen von 30 bis 100° C, bevorzugt von 45° C bis 80° C, polymerisiert wird.

Das beanspruchte Verfahren wird als Emulsionspolymerisation durchgeführt. Zur Emulsionspolymerisation können alle üblichen Hilfsmittel, wie Emulgatoren, Schutzkolloide, Initiatoren, Reduktionsmittel und Regler, in üblichen Mengen verwendet werden, wobei auch hier je nach Wunsch - soweit nicht durch die Erfindungsdefinition ausgeschlossen - eine Vorlage, eine portionsweise Zugabe oder eine mehr oder weniger kontinuierliche Dosierung möglich sind. Vorzugsweise wird erfindungsgemäß jedoch ohne Anwesenheit von Emulgator polymerisiert.

Die Polymerisation wird mit den für die Emulsionspolymerisation üblicherweise eingesetzten Methoden eingeleitet. Besonders geeignet sind zumindest wasserlösliche, bevorzugt gänzlich wasserlösliche anorganische oder organische peroxidische Verbindungen, wie Peroxoverbindungen und Hydroperoxide, sowie wasserlösliche Azoverbindungen. Wesentlich für die Emulsionspolymerisation ist bekanntlich die Tatsache, daß die Radikalbildung in der wäßrigen Phase stattfindet (vgl. Kirk-Othmer, Encyclopedia of Chemical Technology, 3. Auflage, Band 18, Seiten 742 - 743).

Gegebenenfalls können die genannten Peroxidinitiatoren auch in bekannter Weise mit Reduktionsmitteln kombiniert werden. Solche Redoxsysteme werden bevorzugt.

Vielfach ist dabei der bekannte Zusatz geringer Mengen von Schwermetallverbindungen, z. B. von Eisen-II-Salzen, angezeigt.

Der für die Polymerisation gewünschte pH-Bereich, der im allgemeinen zwischen 2,5 und 10, insbesondere 3 und 8, liegt, kann in an sich bekannter Weise durch geeignete Puffersysteme, z. B. den Phosphat- oder Carbonatpuffer, konstant gehalten werden.

Das Verhältnis von vorgelegtem zu später dosiertem Schutzkolloid bzw. Emulgator kann ebenso wie die Gesamtmenge dieser Komponenten schwanken. Beide Größen dienen der Erzielung des von der Dispersion geforderten anwendungstechnischen Eigenschaftsbildes und müssen diesen Forderungen gemäß angepaßt werden. Vorgelegt werden meist 0,1 bis 4 Gew.-%, bevorzugt 0,3 bis 1,2 Gew.-% des Schutzkolloids und gegebenenfalls Emulgators, bezogen auf die Komponente b. Bevorzugt wird nur Schutzkolloid, aber kein Emulgator, vorgelegt. Die Gesamtmenge an Schutzkolloid und Emulgator bewegt sich zwischen 5 und 18, vorzugsweise zwischen 7 und 13, und besonders bevorzugt zwischen 8 und 12 Gew.-%, bezogen auf die Komponente b.

Dabei beträgt der Emulgatoranteil (bezogen auf die Gesamtmenge an eingesetztem Schutzkolloid und Emulgator) maximal 50 Gew.-%, bevorzugt höchstens 30 Gew.-%. In einer besonders bevorzugten Form wird nur Schutzkolloid, aber kein Emulgator verwendet.

Im Reaktionsgefäß befinden sich in der bevorzugten Ausführungsform vor dem Start der Reaktion als Vorlage lediglich Wasser, ein geringer Anteil Schutzkolloid, ein geringer Anteil einer Initiatorkomponente (im allgemeinen 10 - 20 Gew.-%, bezogen auf das Gesamtgewicht dieser Initiatorkomponente) sowie gegebenenfalls die zur Einstellung des gewünschtes pH-Werts und Pufferung notwendigen Salze und gegebenenfalls katalytische Mengen an Schwermetallsalzen. In einer speziellen Ausführungsform können dieser Vorlage noch inerte organische Substanzen in Mengen von insgesamt 0,1 bis 15 Gew.-% (bezogen auf das Gesamtgewicht der Komponente b) zugefügt werden. Diese inerten organischen Substanzen besitzen Wasserlöslichkeiten von $10^{-3}$ bis 200 g pro Liter und Molekulargewichte von höchstens 1000. Solche geeigneten Verbindungen sind beispielsweise in der EP-A 76511 genannt, auf deren diesbezügliche Offenbarung hier ausdrücklich Bezug genommen wird. Möglich, aber nicht bevorzugt, ist weiterhin die Zugabe von bis zu 10 Gew.-% (bezogen auf Komponente b), insbesondere bis zu 5 Gew.-%, der Comonomeren zur Vorlage.

Die Zugabe des (der) Comonomeren, also der Komponente b, beginnt vorzugsweise frühestens gleichzeitig mit dem prinzipiell möglichen Start, z. B. mit konstanter Dosierrate oder vorzugsweise im Maße des Verbrauches. 60 - 180 Minuten nach Dosierende der Comonomeren ist die Reaktion üblicherweise beendet.

Die Zugabe des nicht vorgelegten Schutzkolloids und Emulgators beginnt ebenfalls frühestens gleichzeitig mit und spätestens 60 Minuten nach dem prinzipiell möglichen Start. Schutzkolloid- bzw. Emulgatordosierung und Monomerdosierung müssen weder gleichzeitig beginnen noch gleichzeitig enden, jedoch werden Schutzkolloid und Emulgator in diesem Fall vorzugsweise ebenfalls im Maße ihres Verbrauches dosiert. In einer bevorzugten Ausführungsform werden die Comonomeren und Schutzkolloid sowie gegebenenfalls Emulgator in einer vorgemischten Form, z. B. besonders bevorzugt als Voremulsion, zugegeben.

Beim erfindungsgemäßen Verfahren kann das Ethylen bevorzugt teilweise oder ganz mit vorgelegt werden, d. h. der beabsichtigte Ethylen-Druck kann bereits vor Beginn der Polymerisation aufgebaut werden. Er kann aber auch erst im Laufe der Polymerisation aufgebaut werden, jedoch spätestens dann, wenn die Vorlage auspolymerisiert oder ein der Vorlage entsprechender Umsatz erreicht ist, vorzugsweise spätestens dann, wenn mit der Dosierung der Comonomeren begonnen wird. Der Ethylen-Druck kann innerhalb der genannten Grenzen während der Polymerisation beliebig, ggf. auch mehrfach variiert werden, d.h. erhöht und/oder erniedrigt werden. Vorzugsweise wird er aber während der überwiegenden Zeit der Comonomerdosierung konstant gehalten. Danach wird dann vorzugsweise kein Ethylen mehr zugeführt.

Als Comonomeres (Komponente b) ist insbesondere das Vinylchlorid zu nennen, das mindestens 60 Gew.-%, vorzugsweise mindestens 85, insbesondere mindestens 95 Gew.-% der Komponente b ausmacht. Als weitere Comonomeren, die mit Ethylen und Vinylchlorid copolymerisierbar und öllöslich sind, sind zu nennen (Komponente b 2): ethylenisch ungesättigte Ester, wie Allyl- und vorzugsweise Vinylester von nicht ethylenisch ungesättigten, vorzugsweise gesättigten geradkettigen, verzweigten oder cyclischen Carbonsäuren, insbesondere von $C_1$ bis $C_{20}$-Alkylcarbonsäuren, z. B. Vinylacetat, Vinylpropionat, Vinylbutyrat, Vinyl-2-ethylhexanoat, Vinyllaurat, Vinylstearat, Vinylester von stark verzweigten Carbonsäuren, die z. B. durch die sogenannte Kochsynthese aus Olefinen und Kohlenoxid hergestellt werden können (sogenannte Versatic®-Säurevinylester), wie Mono- und Dialkylester von ethylenisch ungesättigten Carbonsäuren, insbesondere solche von Alkoholen mit 1 bis 18, vorzugsweise 1 bis 8 C-Atomen mit $\alpha$, $\beta$-ungesättigten $C_3$- bis $C_8$-Monocarbonsäuren, z. B. Methylester der Acryl-, der Methacryl- und der Crotonsäure, die Ethyl-, Propyl-, Butyl-, 2-Ethylhexyl-, Lauryl- und Stearylester dieser Carbonsäuren, Dialkylester von ethylenisch ungesättigten $C_4$-bis $C_{10}$-Dicarbonsäuren, z. B. die Ester der genannten $C_1$- bis $C_{18}$-Alkohole mit Malein-, Fumar- und Itakonsäure, sowie $\alpha$-Olefine, z. B. Propylen, Butylen, Styrol und Vinyltoluol, wie Vinylether und Vinylketone, Vinylhalogenide wie Vinylfluorid und -bromid, sowie Vinylidenhalogenide, z. B. Vinylidenchlorid.

Bevorzugt werden die genannten Ester, insbesondere die Vinylester, die Acrylsäure-, die Methacrylsäure-, die Maleinsäure-, die Fumarsäureester und die Halogenderivate des Ethylens. Besonders bevorzugt sind die genannten Ester. Diese monoethylenisch ungesättigten, keine weiteren Reaktionen eingehend, z.B. nicht vernetzend wirkenden Monomeren, die einzeln oder als Gemisch eingesetzt werden können, sind in der Comonomerkomponente b. in Mengen bis höchstens 40 Gew.-%, vorzugsweise höchstens 15 Gew.-%, insbesondere gar nicht, enthalten.

Weiterhin können in der Comonomerkomponente b noch weitere mit den anderen Monomeren copolymerisierbare Monomeren in Mengen von 0 bis 10 Gew.-% enthalten sein. Solche Monomeren sind solche, die funktionelle Gruppen tragen oder mehrfach ethylenisch ungesättigt sind. Bevorzugt sind die funktionellen Monomeren. Unter ihnen werden hier solche Verbindungen verstanden, die neben einer ethylenischen Doppelbindung noch Carboxyl- (COOH- oder COO⁻-), Sulfonat-, Epoxid-, Hydroxyl- oder ggf. durch z. B. Alkyl-, Hydroxyalkyl-, Alkoxyalkyl-, Alkanoyl- oder Alkanoylalkyl-Gruppen substituierte Amidreste aufweisen.

Als Beispiele hierfür seien genannt: Acryl-, Methacryl-, Itakon-, Fumar- und Maleinsäure, deren Alkali- oder Ammoniumsalze, deren Glycidylester, deren Mono- oder Diamide, insbesondere Acrylamid und Methacrylamid, die am Stickstoff ein- oder zweifach durch $C_1$- bis $C_4$-Alkylgruppen und/oder durch die Methylolgruppe, die ihrerseits auch durch einen Alkylrest verethert oder durch eine Alkylcarbonsäure verestert sein kann, substituiert sein können, Monoester der genannten Dicarbonsäuren mit den bereits früher genannten $C_1$- bis $C_8$-Alkanolen, Vinyl- und Allylsulfonate.

Als Beispiele für mehrfach ungesättigte Monomeren seien angeführt:
Vinyl- und Allylester ungesättigter $C_3$- bis $C_8$-Monocarbonsäuren, sowie Mono- oder Divinyl- und-allylester von gesättigten oder ungesättigten $C_4$- bis $C_{10}$-Dicarbonsäuren, Triallylcyanurat und Di- und Polyester von $\alpha$, $\beta$-ungesättigten Carbonsäuren mit polyfunktionellen Alkoholen.

Oftmals werden solche Monomeren der Gruppe b 3, insbesondere die gut wasserlöslichen, wie die Carbonsäuren, ihre Salze und ihre Amide, und ganz bevorzugt die Sulfonate vorzugsweise nur in Mengen von bis zu 2 Gew.-% eingesetzt, da sie als Stabilitätsverbesserer der Dispersion verwendet werden. Monomere, über die spätere Vernetzung erfolgen kann, z. B. N-Methylol(meth)-acrylamid werden oftmals vorzugsweise bis 5 Gew.-% eingesetzt. Die genannten Gew.-%-Angaben beziehen sich dabei jeweils auf das Gesamtgewicht der Comonomerenkomponente b.

Bevorzugt werden als Comonomere Gemische von Vinylacetat mit Vinylchlorid und insbesondere Vinylchlorid allein eingesetzt. Ein Zusatz wasserlöslicher Monomerer ist oftmals überflüssig und unterbleibt daher gemäß einer besonders bevorzugten Ausführungsform.

Die für das erfindungsgemäße Verfahren geeigneten Emulgatoren und Schutzkolloide sind dem Fachmann bekannt.

Prinzipiell sind nahezu alle oberflächenaktiven Substanzen zum Einsatz bei der Emulsionspolymerisation geeignet. Anwendungstechnische Anforderungen, eingesetzte Monomere und Reaktionsbedingungen bestimmen die Auswahl im konkreten Fall.

Emulgator und Schutzkolloid, insbesondere PVOH ohne jeden Emulgatorzusatz, werden in Mengen von insgesamt 0,5 bis 15 Gew.-%, vorzugsweise von 3 - 10 Gew.-%, bezogen auf die bei den Reaktionsbedingungen flüssigen Monomeren (Komponente b), eingesetzt. Werden zusätzlich Comonomere verwendet, die bekanntermaßen dispersionsstabilisierend wirken (z. B. Vinylsulfonat), kann jedoch auch schon der Zusatz von ca. 1 bis 3 Gew.-% Schutzkolloid sehr gute Ergebnisse liefern. Die Vorlage von Schutzkolloid und Emulgator beträgt vorzugsweise höchstens 40 Gew.-%, mehr bevorzugt höchstens 25 Gew.-%, insbesondere höchstens 10 Gew.-% der Gesamtmenge von Schutzkolloid und ggf. Emulgator.

Als Schutzkolloide werden die für die Polymerisation allgemein üblichen eingesetzt, z. B. Cellulosederivate oder wasserlösliche Polymerisate, wie teilverseiftes Polyvinylacetat (Polyvinylalkohol) oder Vinylpyrrolidonpolymerisate. Bevorzugt wird Polyvinylalkohol mit einem Hydrolysegrad von 70 bis 99,8 mol-% (entsprechend einer Verseifungszahl von ca. 10 bis ca. 257), vorzugsweise 74 bis 99,5 mol-% (entsprechend Verseifungszahlen von ca. 20 bis ca. 240) und mit einem mittleren Polymerisationsgrad von 200 bis 300 (entsprechend einer Viskosität der 4 Gew.-%igen wäßrigen Lösung bei 20° C von ca. 3 bis ca. 50 mPa.s.).

Es ist selbstverständlich möglich, Gemische unterschiedlicher Schutzkolloide zu verwenden, z. B. Gemische höher- und niedrigerviskoser, bzw. höher- und niedrigverseifter PVOHs. Es können auch eines oder einige dieser Schutzkolloide eher und (ein) andere(s) später zugesetzt werden. Es sei auch daran erinnert, daß Polymerisate allgemein eine gewisse Bandbreite in ihrer Zusammensetzung aufweisen, also z. B. ein bestimmter Polyvinylalkohol, charakterisiert durch die obigen Merkmale, nicht nur aus einer einzigen Molekülspezies besteht.

Wenngleich Systeme ohne Emulgatorzusatz bevorzugt werden, können, sofern dies gewünscht wird, auch anionische und/oder nichtionogene Emulgatoren in Mengen von höchstens 50 Gew.-%, bevorzugt höchstens 30 Gew.-% und mehr bevorzugt höchstens 10 Gew.-%, bezogen auf die Gesamtmenge an Emulgator und Schutzkolloid, verwendet werden.

Eine Gliederung der für das erfindungsgemäße Verfahren möglichen Emulgatoren nach ihrer chemischen Natur findet sich z. B. bei Stache, "Tensid-Taschenbuch", Seiten 159 ff, München 1979.

Sofern überhaupt Emulgatoren verwendet werden sollen, so eignen sich zur Emulsionspolymerisation nach dem erfindungsgemäßen Verfahren insbesondere folgende Arten anionischer Tenside:

1. Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 40 Ethylen- bzw. Propylenoxideinheiten (EO- bzw. PO-Einheiten).

2. Sulfonate, insbesondere Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese Alkohole oder Alkylphenole auch mit 1 bis 40 Ethylenoxid (EO-)Einheiten ethoxyliert sein.

3. Alkali- und Ammoniumsalze von Carbonsäuren mit 8 bis 20 C-Atomen im Alkyl-, Aryl, Alkaryl- oder Aralkylrest.

4. Phosphorsäureteilester und deren Alkali- und Ammoniumsalze, besonders Alkyl- bzw. Alkylarylphosphate mit 8 bis 20 C-Atomen im organischen Rest, Alkylether- bzw. Alkylaryletherphosphate mit 8 bis 20 C-Atomen im Alkyl- bzw. Alkylarylrest und 1 bis 40 EO-Einheiten.

Als nichtionogene Tenside bieten sich ggf. besonders an:

5. Alkylpolyglykolether, bevorzugt mit 8 bis 40 EO-Einheiten und Alkylresten von 8 bis 20 C-Atomen,

6. Alkylarylpolyglykolether, bevorzugt mit 8 bis 40 EO-Einheiten und 8 bis 20 C-Atomen in den Alkyl- und Arylresten.

7. Ethylenoxid/Propylenoxid (EO/PO)-Blockcopolymere bevorzugt mit 8 bis 40 EO-bzw. PO-Einheiten.

Die Polymerisation wird, wie bereits angesprochen, vorzugsweise mittels sogenannter Redoxinitiatorsysteme initiiert, die im allgemeinen aus einer Kombination mindestens einer peroxidischen Verbindung und mindestens einem Reduktionsmittel bestehen. Eine dieser Komponenten kann ganz oder teilweise vorgelegt werden, die andere Komponente und ggf. der Rest der teilweise vorgelegten Komponente oder ggf. beide Komponenten werden dann im Verlaufe der Polymerisation dosiert.

Bevorzugt wird eine geringe Menge der reduzierenden Komponente vorgelegt.

Im allgemeinen benötigt man ca. 0,01 bis ca. 0,5 Gew.-%, vorzugsweise 0,3 bis 0,5 Gew.-%, an Reduktionskomponente und ca. 0,01 bis ca. 2 Gew.-%, vorzugsweise 0,03 bis 0,8 Gew.-%, an Oxidationskomponente, wobei vielfach besonders gute Ergebnisse erhalten werden, wenn das Molverhältnis von Oxidations- zu Reduktionskomponente von 0,5 bis 4 beträgt. Wird die Polymerisation thermisch initiiert, kann natürlich die Reduktionskomponente weggelassen werden. Obige %-Angaben beziehen sich jeweils auf das Gesamtgewicht der Komponente b.

Bevorzugte Beispiele für die Oxydationskomponente sind folgende peroxidische Verbindungen:

Ammonium- und Kaliumpersulfat, -peroxodisulfat, Wasserstoffperoxid, Alkylhydroperoxide, wie tert.-Butyl-hydroperoxid, Peroxodiphosphate, wie Kalium-, Natrium- und Ammoniumperoxodiphosphat. Statt der peroxidischen Verbindungen können auch Azoverbindungen verwendet werden, z.B. Azobisisobutyronitril oder Azobiscyanovaleriansäure.

Als bevorzugte Beispiele für die Reduktionskomponente sind Verbindungen des Schwefels, in denen der Schwefel nicht in seiner formalen Oxidationsstufe +6 vorliegt, zu nennen. Insbesondere seien genannt: wasserlösliche Sulfite und Sulfoxylate, wie Alkali-(Na-, K-) oder Zinkformaldehydsulfoxylat oder Natrium- und Kaliumsulfit und -bisulfit.

Vielfach ist die Katalyse durch Zusatz von Spuren geeigneter Schwermetallsalze, wie z. B. $Fe^{2+}$, angezeigt.

Geeignete Initiatorsysteme werden u. a. in "Fundamental Principles of Polymerization", G.F. Alelio, John Wiley and Sons Inc., New York, 1952 auf den Seiten 333 ff. und in DE-B-11 33 130 beschrieben.

Die erfindungsgemäß hergestellten Copolymeren besitzen vorzugsweise K-Werte (nach DIN 53 729, gemessen in $THF/H_2O$ 95:5) von 20 bis 100, besonders vorzugsweise 30 bis 80, insbesondere 35 bis 70. Die Mindestfilmbildtemperaturen liegen im allgemeinen bei höchstens 25° C, vielfach bei höchstens 0° C, abhängig vom Ethylengehalt.

Die erfindungsgemäß hergestellten, überwiegend VC und E enthaltenden Polymerisatdispersionen oder Polymerisate können in allen Gebieten Anwendung finden, für die die bekannten Vinylester/Vinylchlorid/Ethylen-Co- und -Terpolymerisate geeignet sind. So können die erfindungsgemäß hergestellten Dispersionen beispielsweise besonders gut zur Herstellung von Dispersionspulvern (redispergierbaren Pulvern), von Holzleim, von Klebemitteln für Papier, Kunststofffolie oder Leder, die sich durch besonders kurze Auszugszeiten auszeichnen, sowie als Bindemittel für Textilien oder als Betonzusatzmittel eingesetzt werden.

Die Erfindung wird durch folgende Beispiele und Vergleichsversuche erläutert. Die Beispiele gliedern sich in drei Gruppen, wobei

die Gruppe A  Versuche beschreibt, die gemäß der DE-A-3227090 durchgeführt wurden. Diese Beispiele sind insbesondere mit den Beispielen C8 bis C12 zu vergleichen.

Die Gruppe B  dient dem Vergleich zu anderen nach "klassischen" Verfahren hergestellten schutzkolloidstabilisierten Vinylchlorid/Ethylen-Dispersionen.

In Gruppe C  wird die beanspruchte Erfindung weiter erläutert.

Der in den Beispielen verwendete PVOH-Typ wird nach dem in den Merkblättern der Firma WACKER-CHEMIE GmbH, D-8000 München (DE) für ihre POLYVIOL(R)-Sorten üblichen Schema angegeben: Die Zahl vor dem Schrägstrich kennzeichnet die Viskosität in mPas (Höpplerviskosität einer 4-%igen wäßrigen Lösung, gemessen bei 20° C), die Zahl hinter dem Schrägstrich die Verseifungszahl (entsprechend dem Verbrauch in mg KOH/1 g Substanz).

Die Viskosität der Dispersionen wird in mPas zusammen mit dem verwendeten Meßgerät (BROOKFIELD-Viskosimeter bzw. EPPRECHT-Rheometer) und der dem Fachmann bekannten Charakterisierung des Schergefälles angegeben (z. B. Bf 20 = Brookfield 20 Umdrehungen/min, Rheo C III = Epprecht, Becher C, Meßstufe 3).

Mit Dos [1] etc. werden die verschiedenen dosierten Zugaben von Reaktionsteilnehmern und Zusätzen bezeichnet.

%-Angaben beziehen sich, soweit nicht anders angegeben, stets auf das Gewicht. Lösungen verstehen sich, soweit nicht anders angegeben, stets als wäßrige Lösungen.

Abkürzungen und Warenzeichen:

APS = Ammoniumpersulfat

VC = Vinylchlorid

VAC = Vinylacetat

E = Ethylen

KPS = Kaliumpersulfat

Brüggolit(R) = Natriumformaldehydsulfoxylat

Rongalit(R) = Natriumformaldehydsulfoxylat

Arkopal(R)N 230 = Nonylphenylpolyglykolether mit ca. 23 EO-Einheiten

Genapol(R)X 150 = Isotridecanol mit ca. 15 EO-Einheiten verethert

t-BHP = tert.-Butylhydroperoxid


Beispiel A 1:

In einem 16 l-Autoklaven wurden 1300 g vollentsalztes Wasser vorgelegt und auf pH 3,7 eingestellt. Es wurde evakuiert, der Rührer auf 500 UpM eingeschaltet, mit $N_2$ gespült und wieder evakuiert. Nun wurden 362 g VAC und 1088 g VC zugegeben. Der Innentemperaturregler wurde auf 43° C gestellt und Ethylen auf 55 bar aufgedrückt. Nach Erreichen des Gleichgewichts wurden die Dos [1] (eine 8 %ige APS-Lösung) und Dos [2] (eine 4 %ige Brüggolit-Lösung) mit 65 g/h eingefahren. 20 Minuten nach Reaktionsbeginn - der nur schwer zu erkennen war - wurde die Dos [4] (eine Mischung aus 1430 g Wasser, 2047 g einer 8,5-%igen Polyviol[R] W 28/70-Lösung, 26 g einer 25 %igen Vinylsulfonatlösung und 479 g einer 25-%igen Arkopal[R]-N-230-Lösung) 6 h lang mit einer Rate von 660 g/h zugegeben. Ab einem Festgehalt zwischen 25 % und 30 % - eine genauere Angabe war wegen der schwer kontrollierbaren Fahrweise nicht möglich - wurde Dos [3] (1335 g VAC und 4000 g VC) in 5,5 h dosiert. Der Ehtylen-Druck wurde dabei langsam auf 60 bar gesteigert.

Der pH wurde mit $NH_3$ zwischen 3,6 und 4,0 gehalten. Nach Erreichen des Endfestgehaltes, ca. 4 - 5 h nach Ende von Dos [3], wurde der pH auf 7,5 gestellt, der Ansatz entspannt und entgast.

Beispiel A 2:

Das Beispiel A 1 wurde identisch wiederholt.

Beispiel A 3:

Das Beispiel A 1 wurde identisch wiederholt.

Beispiel A 4:

Beispiel A 1 wurde mit folgenden Änderungen wiederholt:
- in der Vorlage befanden sich 1400 g vollentsalztes Wasser, 7,5 g VAC und 225 g VC und 0,6 g Allylmethacrylat
- Dos [2] (eine 5,5-%ige Rongalit[R]-Lösung) wurde mit 60 g/h dosiert
- Dos [3] bestand aus 1625 g VAC, 4875 g VC und 13 g Allylmethacrylat. Ihre Zugabe begann 10 Minuten nach Reaktionsbeginn und dauerte 5 1/2 h.
- Dos [4] war eine Mischung aus 2916 g einer 8,5 Gew.-%igen Polyviol[R] W 28/70-Lösung, 1258 g einer 20-%igen Polyviol[R] G 04/140-Lösung und 200 g Wasser. Ihre Zugabe begann 10 Minuten nach Reaktionsbeginn und dauerte 5 1/2 h.

Beispiel A 5:

Beispiel A 4 wurde identisch wiederholt.

Beispiel A 6:

In einem 16 l-Autoklaven wurden 900 g Wasser und 500 g KPS vorgelegt. Der pH-Wert wurde auf 3,5 eingestellt und der Rührer eingeschaltet. Danach wurde evakuiert, mit $N_2$ gespült, wieder evakuiert und eine Mischung aus 322 g VAC und 968 g VC eingesaugt. Der Temperaturregler wurde auf 40° C eingestellt und Ethylen auf 55 bar aufgedrückt. Nach Erreichen des Temperaturgleichgewichts wurde Dos [2] (eine 1,5 %ige Rongalit[R]-Lösung) mit 50 g/h gestartet.

20 Minuten nach Reaktionsbeginn wurde Dos [4] (eine Mischung aus 2700 g einer 8,5-%igen Polyviol[R] W 28/70-Lösung, 2785 g einer 11-%igen Polyviol[R] M 13/140-Lösung und 65 g einer 30-%igen Lösung von GENAPOL[R] X 150 mit einer Rate von 620 g/h in 9 h dosiert.

1 h nach Reaktionsbeginn wurde Dos [3] (1225 g VAC und 3675 g Vinylchlorid) mit einer Rate von 600 g/h in 8 h zugegeben.

Der pH wurde im gesamten Reaktionsverlauf bei 3,5 bis 4,0 gehalten.

Nach Dosierende der Dos [3] wurde Dos [2] noch so lange dosiert, bis zweimal der gleiche Festgehalt erreicht wurde. Dann wurde auf pH 7 gestellt, entspannt und entgast.

Beispiele A 7 - A 9:

Beispiel A 6 wurde identisch wiederholt, wobei bei zwei Versuchen die Rührung von 200 auf 140 bzw. 120 UpM zurückgenommen wurde.

Die Analysen der Beispiele A 1 bis A 9 befinden sich in der Tabelle 1.

Beispiel A 10:

In einem 16-ltr.-Autoklaven wurden 100 mg Ferroammonsulfat, 1990 g Wasser und 1150 g VC vorgelegt. Der pH wurde auf 4,5 eingestellt.

Es wurde evakuiert und mit Stickstoff gespült. Nach erneutem Evakuieren wurde auf 50° C erwärmt und 65 bar Ethylen aufgedrückt. Dieser Druck wurde bis zum Dosierende der Komponente b konstant gehalten, danach wurde das Ethylenventil geschlossen. Kurz vor dem Aufheizen wurden 100 ml von Dos [1] (eine 3%ige t-BHP-Lösung) zugegeben.

5 Minuten nach Erreichen des Ethylengleichgewichts wurden Dos [1] und Dos [2] (eine 3-%ige RONGALIT(R)-Lösung) mit jeweils 180 g/h gestartet. 10 Minuten nach Beginn der Reaktion - die schwer zu erkennen war, aber ca. 30 Minuten nach Beginn beider Dosierungen einsetzte - wurde eine Festgehaltsprobe entnommen, die 13 % Festgehalt ergab. Nun wurde mit der Dosierung einer Mischung aus 1150 g Wasser und 4200 g einer 20-%igen Polyviol(R) G 04/140-Lösung begonnen (Dos [4], 900 g/h). 15 Minuten später wurde Dos [3] (6490 g VC) mit einer Rate von 1100 g/h zugefahren. Durch Anpassung der Dosierungen [1] und [2] wurde im folgenden der Umsatz konstant gehalten. Nach dem Ende der Monomerdosierung wurden Dos [1] und Dos [2] noch bis zum Ende der Reaktion weiter dosiert, danach wurde entspannt und die Dispersion von restlichem VC durch Evakuieren befreit.

Beispiel A 10 ist mit Beispiel C 12 in der Bruttozusammensetzung identisch. Das Verfahren wurde in Beispiel A 10 jedoch an die Bedingungen der DE-A-3227090 angepaßt. Es wurde eine 51 %ige, relativ grobteilige, stark stippige Dispersion erhalten, deren Analysen sich in Tabelle 2 befinden. Das gesamte Eigenschafsbild der Dispersion entsprach nicht den Anforderungen der vorliegenden Erfindung.

Beispiel A 11:

Beispiel A 10 wurde wiederholt, wobei der Einfahrzeitpunkt der Dosierungen [3] und [4] vorverlegt wurde, um eine im Vergleich zu A 10 monomerreichere Fahrweise einzustellen. Der Ansatz startete jedoch trotz zusätzlichen Ferroammonsulfates nur schlecht, nämlich erst ca. 3 Stunden nach Beginn der Initiatordosierung. Trotz der monomerreicheren Fahrweise wurde kein Produkt erhalten, dessen Eigenschaften sich mit dem erfindungsgemäßen C 12 vergleichen ließe. Die Analysen dieser ebenfalls stark stippigen Dispersion finden sich ebenfalls in Tabelle 2.

Die Disc-Zentrifugen-Aufnahmen der nicht erfindungsgemäßen Beispiel A 10 und A 11 und des erfindungsgemäßen Beispiels C 12 befinden sich in der Abbildung 8.

Beispiel B 1:

Dieses Beispiel ist eine "klassische" Variante zur Herstellung PVAL-stabilisierter Vinylester-Dispersionen. Die quantitative Zusammensetzung entsprach wiederum dem erfindungsgemäßen Beispiel C 12. Das Vorgehen unterschied sich in folgenden Punkten von diesem Beispiel:
- die gesamte PVAL-Menge wurde vorgelegt
- 15 % des gesamten Comonomeren wurden vorgelegt, 85% dosiert.

Der Versuch wurde im Detail wie folgt durchgeführt:

In einem 16-ltr.-Autoklaven wurden 3130 g Wasser und 4200 g einer 20 %igen Polyviol(R) G 04/140-Lösung vorgelegt. Nach dem Evakuieren und einer $N_2$-Spülung wurde abermals evakuiert. Dann wurden 1150 g VC eingesaugt, der Rührer eingefahren, auf 50° C erwärmt und 68 bar Ethylen aufgedrückt. Dieser Druck wurde bis zum Dosierende des Monomeren konstant gehalten, danach wurde das Ethylenventil geschlossen. Der pH-Wert wurde auf 4,3 eingestellt und im weiteren Verlauf konstant gehalten.

Die Reaktion wurde durch Zudosieren von 150 g/h einer 3-%igen t-BHP-Lösung (Dos [1]) und 150 g/h einer 5-%igen RONGALIT(R)-Lösung (Dos [2]) gestartet. Dreißig Minuten nach Reaktionsbeginn wurde mit der Dos [3] (6500 g VC) mit einer Rate von 1100 g/h begonnen. Die Umsatzentwicklung wurde im weiteren Verlauf durch entsprechende Variation von Dos [1] und Dos [2] gleichmäßig gehalten.

Bei einem Festgehalt von ca. 46 % trat Flüssigkeitsdruck auf - ein typisches Zeichen für sehr mangelhaften Ethyleneinbau. Der Ansatz wurde daraufhin abgebrochen. Schon bei diesem niedrigen Festgehalt zeigte die DISC-Auswertung (Fig. 9), daß die Dispersion nicht den Qualitätsanforderungen entsprach.

Beispiel C 1:

In einem 16 l-Autoklaven wurden 237 g einer 15-%igen Polyviol[(R)] M 05/140-Lösung, 2680 g vollentsalztes Wasser und 208 g Dioctylsebacat (DOS) vorgelegt. Der pH-Wert wurde auf 4,2 eingestellt.

Es wurde evakuiert und mit Stickstoff gespült. Nach erneutem Evakuieren wurde auf 50° C erwärmt und Ethylen auf 68 bar aufgedrückt. Dieser Druck wurde bis zum Dosierende der Komponente b konstant gehalten, dann wurde das Ethylenventil geschlossen.

Vor Reaktionsbeginn wurden zudem noch 20 ml einer 5-%igen RONGALIT[(R)]-Lösung vorgelegt.

Die Dosierung [3] (Vinylchlorid) mit einer Rate von 1300 g/h, die Dosierung [1] (4-%ige t-BHP-Lösung) mit 130 g/h und die Dosierung [2] (6-%ige RONGALIT[(R)]-Lösung) mit 150g/h wurden gleichzeitig und die Dosierung [4] (eine 15-%ige Polyviol[(R)] M 05/140-Lösung) mit 1000 g/h wurde 30 Minuten später gestartet. Die Dosierungen [3] und [4] liefen dann über 4,5 h mit konstanter Rate zu. Dosierung [1] lief insgesamt 6,5 h, wobei die Dosierrate allmählich, entsprechend dem Umsatz zurückgenommen wurde. Der Ansatz startete innerhalb von 8 - 10 Minuten nach Beginn der Initiatordosierung.

Der pH-Wert wurde durch Zugabe von $NH_3$ zwischen 3,8 und 4,2 gehalten. Nach Ende der Initiatordosierung wurde der Ansatz vom restlichen Vinylchlorid und Ethylen durch entspannen und einstündiges Evakuieren befreit. Die Enddispersion besaß einen Festgehalt von 50,0 %, die Polymerisationszeit betrug 6,5 h.

## Beispiel C 2:

Beispiel C 1 wurde mit folgenden Änderungen wiederholt:
- es wurde kein DOS eingesetzt
- es wurden 3 g Natriumacetat zur pH-Pufferung in die Vorlage gegeben
- die Dosierung [4] bestand aus 1130 g Wasser, 2830 g einer 20-%igen Lösung von Polyviol[(R)] G 04/140 und 907 g einer 25-%igen Lösung eines Nonylphenylpolyglykolethers mit ca. 23 EO-Einheiten (ARKOPAL[(R)]N 230).

Die Enddispersion besaß einen Festgehalt von 53 %, die Polymerisationsdauer betrug 8,5 h.

## Beispiel C 3:

Beispiel C 1 wurde mit folgenden Änderungen wiederholt:
- in Dosierung [4] wurde der Polyviol[(R)] M 05/140 gegen Polyviol[(R)] M 05/60 ausgetauscht.

Es wurde eine 49,4-%ige Dispersion erhalten.

## Beispiel C 4:

Beispiel C 1 wurde mit folgenden Änderungen wiederholt:
- als Dos [1] wurde eine 5,5-%ige Ammoniumpersulfatlösung eingesetzt
- der Druck betrug 82 bar
- die Innentemperatur betrug 78° C
- Dos [2] wurde ohne Ersatz weggelassen.

## Beispiel C 5:

Beispiel C 1 wurde mit folgenden Änderungen wiederholt:
- in der Vorlage befand sich kein DOS
- als Dos [3] wurde eine Mischung aus 6450 g VC und 1140 VL (Vinyllaurat) eingesetzt
- in Dos [4] befanden sich zusätzlich 126 g 30-%ige Vinylsulfonat-Lösung und 76 g Dibutylmaleinat.

Eine Charakterisierung der in den Beispielen C 1 - C 5 erhaltenen Dispersionen befindet sich in Tabelle 3.

## Beispiel C 8:

In einem 600 ltr.-Autoklaven wurden 5,6 kg einer 20-%igen Polyviol[(R)] G 04/140-Lösung und 52,8 kg vollentsalztes Wasser vorgelegt. Der pH-Wert wurde auf 4,7 eingestellt.

Es wurde evakuiert und mit Stickstoff gespült. Nach erneutem Evakuieren wurde auf 50° C erwärmt und Ethylen auf 68 bar aufgedrückt. Dieser Druck wurde bis zum Dosierende der Komponente b konstant gehalten, dann wurde das Ethylenventil geschlossen. Vor Reaktionsbeginn wurden außerdem noch 7 kg einer 5-%igen RONGALIT[(R)]-Lösung mit vorgelegt.

11

Die Dosierung [3] (VC) wurde mit einer Rate von 28 kg/h, die Dosierung [1] (4-%ige t-BHP-Lösung) mit 4,8 kg/h, die Dosierung [2] (5-%ige RONGALIT[(R)]-Lösung) mit 4,8 kg/h und die Dosierung [4] (eine Mischung aus 117 kg einer 20-%igen Polyviol[(R)] G 04/140-Lösung mit 33,6 kg Wasser) mit einer Rate von 19 kg/h eingefahren. Während der Polymerisation wurden die Dosierungen [3] und [4] mit konstanter Rate 8 h lang zudosiert. Die Dosierungen [1] und [2] liefen insgesamt 9 h, wobei die Dosierrate an den Umsatz angepaßt wurde, um eine gleichmäßige Reaktion zu gewährleisten.

Der pH-Wert wurde durch Zudosieren von $NH_3$ zwischen 4,5 und 4,7 gehalten. Nach Ende der Initiatordosierung wurde der Ansatz entspannt und durch einstündiges Evakuieren von restlichem Vinylchlorid befreit. Das Ergebnis ist in Tabelle 4 dargestellt.

Beispiele C 9 und C 10:

Beispiel C 8 wurde zweimal wiederholt. Dabei wurde lediglich die vorgelegte Wassermenge geringfügig variiert, woraus sich die etwas verschiedenen Festgehälter und Viskositäten erklären. Tabelle 4 zeigt die sehr gute Reproduzierbarkeit, die Messungen mit der Disc-Zentrifuge und dem Nano-Sizer lagen innerhalb der Fehlergrenze.

Beispiele C 11 und C 12:

Beispiel C 8 wurde wiederholt, wobei die vorgelegte Wassermenge auf 72 kg erhöht wurde. Der Verbrauch an Initiator wurde gegenüber Beispiel C 8 deutlich erhöht, woraus sich die niedrigere Mindestfilmbildetemperatur MFT erklärt. Beispiel C 11 wurde anschließend im 16 ltr.-Maßstab als Beispiel C 12 wiederholt. Zwischen C 11 und C 12 zeigten sich keine Unterschiede, obwohl eine Maßstabsanpassung um einen Faktor 50 vorgenommen worden ist. Darüberhinaus war bei den Versuchsapparaturen keinerlei geometrische Ähnlichkeit gegeben. Die zugehörigen Werte befinden sich in Tabelle 4.

Tabelle 1: Reproduzierbarkeit von Ansätzen nach DE-A-32 27 090

| Beispiel | Festgehalt | Bf1 | Bf20 | Struktur-faktor | Absitzen | Bemerkungen |
|----------|-----------|------|------|-----------------|----------|-------------|
| A1 | 55,6 | 8200 | 2160 | 1,96 | 0,8 | |
| A2 | 54,4 | 4000 | 1230 | 2,59 | 0,9 | |
| A3 | 54,5 | 1240 | 566 | 0,87 | 1,6 | feinstippig |

| Beispiel | Reaktion nach Min. | Bf 20 |
|----------|--------------------|-------|
| A4 | 5 | dilatant |
| A5 | 15 | 8560 |

| Beispiel | Rührung UpM | Festgehalt | Bf 10 | RheoCIII | Reaktion nach Minuten | End-druck |
|----------|-------------|-----------|--------|----------|------------------------|-----------|
| A6 | 200 | 52 | 17760 | 5300 | 90 | 65 |
| A7 | 200 | 48,6 | 35680 | 15476 | 30 | >90 |
| A8 | 140 | 45 | 13600 | 1281 | 120 | >90 |
| A9 | 120 | 48,7 | 10760 | 3274 | 60 | 62 |

Tabelle 2:

Beispiele A 10 und A 11:
Dispersionen nach dem von DE-A-32 27 090 vorgeschlagenen Verfahren.
Beispiel C 12 ist erfindungsgemäß.

| Beispiel | A10 | A11 | C12 |
|---|---|---|---|
| Festgehalt [%] | 51 | 52 | 51,3 |
| MFT [°C] | 10,5 | 0 | 3 |
| K-Wert | - | - | 45 |
| Siebrückstand [g/kg] 160 µm-Sieb | 1,1 | 8,6 | 0,2 |
| Siebrückstand [ppm] 60 µm-Sieb | 110 | 129 | 42 |
| Bf20 [mPa.s.] | 208 | 360 | 3800 |
| Strukturfaktor | 0,44 | 0,7 | 3,1 |
| DISC-Gewichtsmittel [µm] | 1,87 | 1,35 | 0,3 |
| DISC-Zahlenmittel [µm] | 0,2 | 0,19 | 0,27 |
| Nano-Sizer [µm] | 0,75 | 0,44 | 0,284 |
| PD | 5 | 6 | *1,11* |
| Bemerkungen | stark stippig | stark stippig | klar |

(ppm = mg/kg)

Tabelle 3:

Analytische Charakterisierung der Beispielgruppe C1 - C5.

| Beispiel | C1 | C2 | C3 | C4 | C5 |
|---|---|---|---|---|---|
| Festgehalt (%) | 50 | 53,3 | 45,4 | 50 | 54,4 |
| MFT (°C) | 0 | 23 | 6 | 12 | 0 |
| K-Wert | 43 | - | 43 | 39 | - |
| Bf20 (mPa.s.) | 1400 | 2250 | 460 | 2300 | 1046 |
| Strukturfaktor | 2,0 | 1,6 | 1,1 | 2,6 | 1,1 |
| DISC-Gewichts- mittel (µm) | 0,39 | 0,31 | 0,46 | 0,39 | 0,49 |
| DISC-Zahlen- mittel (µm) | 0,36 | 0,29 | 0,46 | 0,25 | 0,48 |
| Nano-Sizer (µm) | 0,35 | 0,28 | 0,55 | 0,27 | 0,58 |

Tabelle 4:

| Beispiel | C8 | C9 | C10 | C11 | C12 |
|---|---|---|---|---|---|
| Autoklaven-volumen (l) | 600 | 600 | 600 | 600 | 16 |
| Festgehalt (%) | 52,7 | 53,7 | 53,5 | 49,6 | 51,3 |
| MFT (°C) | 9 | 9 | 7 | 2,5 | 3 |
| K-Wert | – | 47 | – | 46 | 45 |
| Siebrückstand g/kg (160 µm Sieb) | 0,03 | 0,07 | 0,12 | 0,1 | 0,2 |
| Siebrückstand ppm (60 µm Sieb) | 13 | 18 | 1 | 7 | 42 |
| Bf20 (mPa.s.) | 4060 | 6340 | 6400 | 3120 | 3800 |
| Strukturfaktor | 3,3 | 3,9 | 3,3 | 3,6 | 3,1 |
| DISC-Gewichts-mittel (µm) | 0,29 | 0,27 | 0,31 | 0,25 | 0,3 |
| DISC-Zahlen-mittel (µm) | 0,24 | 0,23 | 0,23 | 0,22 | 0,27 |
| Nano-Sizer (µm) | 0,306 | 0,283 | 0,265 | 0,281 | 0,284 |
| PD | 1,21 | 1,17 | 1,35 | 1,14 | 1,11 |

Literaturliste:

1. G. Langer, Colloid & Polymer Sci. 257, 522 - 532 (1979)
2. P. Hauser, G. Honigmann, Farbe und Lack 83, 886 - 890 (1977)
3. R.K. Eckhoff, J. Appl. Polymer Sci. 11, 1855 - 1861 (1967)
4. E. Atherton, A.C. Cooper, M.R. Fox, J. Soc. Dyers & Colourists 80, 521 - 526 (1964)
5. A.F. Bogenschütz, U. Geoge, J. Jentzsch, Fachberichte für Oberflächentechnik 10, 1 - 4 (1972)
6. H. Sonntag, K. Strenge, Koagulation und Stabilität disperser Systeme, Berlin, 1970.

Die Figuren 1 - 9 beschreiben im einzelnen:

Fig. 1:

Teilchengrößeverteilung (Gewichtsverteilungskurven) der in Beispiel CII hergestellten Dispersion, gemessen mit der DISC-Zentrifuge, dargestellt mit zwei unterschiedlichen Maßstäben der Teilchen-Durchmesser

EP 0 224 169 B1

```
T.-DURCHMESSER (µm)

MITTELWERT:   GEWICHT:        25 µm
              ZAHLEN :       .22 µm

MAXIMUM:      GEWICHT:       .25 µm
              ZAHLEN :       .21 µm

SPEZ.OBERFLACHE        28.532 m/g
```

Fig. 2:

Auswertung der elektronenmikroskopischen Aufnahme der Dispersion aus Beispiel C II

```
VOLUMEN-               DURCHMESSER-
VERTEILUNG             VERTEILUNG

MITTELVERT. .251       INTERVALLBREITE .015
MAXIMUM .205           MITTELVERT. .235
                       MAXIMUM .225
                       VERTEILUNG VON .06-.38        0.06 — 0.38
                       SIGMA .064                    —————
                                                     0.064
```

Fig. 3:

Elektronenmikroskopische Aufnahme der in
Beispiel CII hergestellten Dispersion

Fig. 4:

Analog Fig. I dargestellte DISC-Zentrifugen-Messung einer analog Beispiel CI hergestellten Vinylchlorid-Ethylen-Copolymerdispersion

```
GEWICHTS-VERTEILUNGSKURVE
MITTELWERT:   GEWICHT:       .40 µm
              ZAHLEN :       .35 µm

MAXIMUM:      GEWICHT:       .36 µm
              ZAHLEN :       .36 µm

SPEZ.OBERFLACHE        10.269 m/g
```

Fig. 5:

Analog Fig. I dargestellte DISC-Zentrifugen-Messung einer nach üblichem Verfahren (analog Beispiel BI) hergestellten Vinylchlorid-Ethylen-Copolymerdispersion

16

GEWICHTS-VERTEILUNGSKURVE

MITTELWERT: GEWICHT: 3.03 $\mu m$
ZAHLEN : 2.36 $\mu m$

MAXIMUM: GEWICHT: 2.71 $\mu m$
ZAHLEN : 2.23 $\mu m$

SPEZ.OBERFLACHE 1.651 $qm/g$

Fig. 6:

Auswertung der elektronenmikroskopischen Aufnahme derselben Dispersion wie in Fig. 5

VOLUMEN-VERTEILUNG

MITTELWERT
MAX . . M

MITTELWERT. 0.285
MAXIMUM. 0.28

DURCHMESSER-VERTEILUNG

INTERVALLBREITE. 0.02
MITTELWERT. 0.18
MAXIMUM. 0.28
VERTEILUNG VON. 0.08 - 0.84
SIGMA 0.068

Fig. 7:

Elektronenmikroskopische Aufnahme der PVOH-stabilisierten VCE-Dispersion der Fig. 5 und Fig. 6

Fig. 8: Vergleich der analog Fig. I dargestellten Teilchengrößenverteilungen der in den Beispielen CI2, AI0 und AII hergestellten Dispersionen

| BEISPIEL C12 | | BEISPIEL A10 | | BEISPIEL A11 | |
|---|---|---|---|---|---|
| $MW_{Gewicht}$ | 0,25 µm | $MW_{Gewicht}$ | 1,35 µm | $MW_{Gewicht}$ | 1,87 µm |
| $MW_{Zahl}$ | 0,22 µm | $MW_{Zahl}$ | 0,19 µm | $MW_{Zahl}$ | 0,2 µm |
| Spez. Oberfläche | 20,5 qm/g | Spez. Oberfläche | 6,042 qm/g | Spez. Oberfläche | 4,5 qm/g |

Fig. 9:

Analog Fig. I dargestellte Teilchengrößenverteilung der in Beispiel BI hergestellten Dispersion

MITTELWERT: GEWICHT: 8.78 $\mu m$
ZAHLEN : .25 $\mu m$

MAXIMUM: GEWICHT: .27 $\mu m$
ZAHLEN : .22 $\mu m$

SPEZ.OBERFLACHE 1.548 $qm/g$

**Patentansprüche**

1. Feinteilige, monomodale schutzkolloidstabilisierte wäßrige Dispersionen eines Polymerisats aus mindestens 75 Gewichts-% Einheiten des Vinylchlorids und des Ethylens und höchstens 25 Gewichts-% Einheiten weiterer damit copolymerisierbarer ethylenisch ungesättigter Monomeren mit einem Festgehalt von 45 bis 70 Gewichts-%, **dadurch gekennzeichnet,** daß die Dispersionen nicht flockuliert ist, daß das Polymer eine mittlere Teilchengröße, gemessen als Gewichtsmittel in der Disc-Zentrifuge, von 150 nm bis 500 nm und einen Polydispersitätsindex von höchstens 1,8 besitzt und daß weniger als 50 Gewichts-% der Polymerteilchen größer als 1000 nm sind.

2. Verfahren zur Herstellung von Copolymerdispersionen gemäß Anspruch 1 durch Emulsionspolymerisation von

   a) 1 bis 40 Gewichts-% Ethylen und
   b) 60 bis 99 Gewichts-% mindestens einen unter den Reaktionsbedingungen flüssigen Comonomeren

   in wäßrigem Medium mittels Radikalinitiatorsystem in Gegenwart von Schutzkolloid und gegebenenfalls höchstens 50 Gewichts-% Emulgator, bezogen auf Gesamtgewicht von Schutzkolloid und Emulgator, wobei sich die Comonomerphase zusammensetzt aus

   b 1) 60 bis 100 Gew.-% Vinylchlorid
   b 2) 0 bis 40 Gew.-% ethylenisch ungesättigter, öllöslicher und mit a und b 1 copolymerisierbarer Monomeren, die außer der einen ethylenischen Doppelbindung keine weiteren bei den Reaktionsbedingungen reaktiven funktionellen Gruppen enthalten, und
   b 3) 0 bis 10 Gew.-% ethylenisch ungesättigter, funktioneller und/oder mehrfach ethylenisch ungesättigter Monomeren,

   **dadurch gekennzeichnet, daß**

   I. zusammen mit Wasser, Schutzkolloid und Comonomer(engemisch) vorgelegt werden, wobei die Schutzkolloid-Menge höchstens 4 Gew.-% und die Menge an Comonomer(engemisch) höchstens 10 Gew.-%, jeweils bezogen auf das Gesamtgewicht der Komponente b), beträgt,
   II. mit der Zugabe der restlichen Menge der Comonomerenkomponente b) frühestens gleichzeitig mit dem prinzipiell möglichen Start der Polymerisation begonnen wird, worunter für den Fall einer Redoxinitiierung das Vorhandensein von Reduktions- und Oxydationskomponente des Initiatorsystems, für den Fall der thermischen Initiierung das Erreichen einer Innentemperatur im Reaktionsgefäß durch Erwärmung von außen verstanden wird, bei der die Halbwertzeit des Initiators weniger als 10 h beträgt,
   III. mit der Zugabe weiteren Schutzkolloids und gegebenenfalls weiteren Emulgators frühestens gleichzeitig mit und spätestens 60 min. nach dem prinzipiell möglichen Start begonnen wird,
   IV. bei einem Ethylendruck von 10 bis 150 bar (1 - 1,5 MPa) und Temperaturen von 30 bis 100 °C polymerisiert wird.

3. Verfahren nach Anspruch 2, **dadurch gekennzeichnet,** daß zusätzlich 0,1 bis 15 Gew.-%, bezogen auf das Gesamtgewicht der Komponente b), inerte organische Substanzen mit einer Wasserlöslichkeit von $10^{-3}$ bis 200 g/l und mit einem Molekulargewicht von höchstens 1000 mit vorgelegt werden.

4. Verfahren nach Anspruch 2 oder 3, **dadurch gekennzeichnet,** daß die Zugabe des restlichen Comonomers (Comonomerengemisches), des restlichen Schutzkolloids und gegebenenfalls des restlichen Emulgators im Maße des jeweiligen Verbrauches erfolgt.

5. Verfahren nach Anspruch 2 oder 4, **dadurch gekennzeichnet,** daß das restliche Comonomer(engemisch) und das restliche Schutzkolloid in vorgemischter Form zugegeben werden.

6. Verwendung der Polymerdispersionen gemäß Anspruch 1 zur Herstellung von Dispersionspulvern, von Klebemitteln für Holz, Papier, Kunststoffolie oder Leder, als Bindemittel für Textilien und als Betonzusatzmittel.

**Claims**

1. Fine, monomodal aqueous dispersions of a polymer of at least 75% by weight of units of vinyl chloride and of ethylene and not more than 25% by weight of units of other ethylenically unsaturated monomers which can be copolymerised with these, which is stabilised by means of a protective colloid and has a solids content of 45 to 70% by weight, characterised in that the dispersions is (sic) not flocculated, in that the polymer has an average particle size, measured as the weight-average in a disc centrifuge, of 150 nm to 500 nm and a polydispersity index of not more than 1.8, and in that less than 50% by weight of the polymer particles are greater than 1,000 nm.

2. Process for the preparation of copolymer dispersions according to Claim 1 by emulsion polymerisation of
    a) 1 to 40% by weight of ethylene and
    b) 60 to 99% by weight of at least one comonomer which is liquid under the reaction conditions
in an aqueous medium by means of a free radical initiator system in the presence of a protective colloid and if appropriate not more than 50% by weight of emulsifier, based on the total weight of protective colloid and emulsifier, the comonomer phase being composed of
    b 1) 60 to 100% by weight of vinyl chloride
    b 2) 0 to 40% by weight of ethylenically unsaturated, oil-soluble monomers which can be copolymerised with a and b 1 and which contain no other functional groups which are reactive under the reaction conditions, apart from the one ethylenic double bond, and
    b 3) 0 to 10% by weight of ethylenically unsaturated functional and/or ethylenically polyunsaturated monomers,
characterised in that
    I. the protective colloid and comonomer (mixture) are initially introduced together with water, the amount of protective colloid being not more than 4% by weight and the amount of comonomer mixture being not more than 10% by weight, in each case based on the total weight of component b),
    II. the addition of the remaining amount of the comonomer component b) is started at the earliest at the same time as the polymerisation start which is in principle possible, which means, in the case of redox initiation, the presence of reducing and oxidising components of the initiator system, and in the case of initiation by means of heat, the achievement of an internal temperature in the reaction vessel, by heating externally, at which the half-life of the initiator is less than 10 hours,
    III. the addition of further protective colloid and if appropriate further emulsifier is started at the earliest at the same time as and at the latest 60 minutes after the start which is in principle possible, and
    IV. the polymerisation is carried out under an ethylene pressure of 10 to 150 bar (1 - 1.5 MPa) at temperatures of 30 to 100°C.

3. Process according to Claim 2, characterised in that 0.1 to 15% by weight, based on the total weight of component b), of inert organic substances having a water solubility of $10^{-3}$ to 200 g/l and a molecular weight of not more than 1,000 are additionally also initially introduced.

4. Process according to Claim 2 or 3, characterised in that the addition of the remaining comonomer (comonomer mixture), the remaining protective colloid and if appropriate the remaining emulsifier is carried out at the rate of the particular consumption.

5. Process according to Claim 2 or 4, characterised in that the remaining comonomer (mixture) and the remaining protective colloid are added in premixed form.

6. Use of the polymer dispersions according to Claim 1 for the preparation of dispersion powders, of adhesives for wood, paper, plastic films or leather, as binders for textiles and as concrete additives.

**Revendications**

1. Fines dispersions aqueuses monomodales, stabilisées avec des colloïdes protecteurs, d'un copolymère formé d'au moins 75% en poids de motifs de chlorure de vinyle et d'éthylène avec au maximum 25% en poids de motifs d'autres monomères éthyléniques copolymérisables avec ces monomères, dispersions qui ont une teneur en matières solides de 45 à 70% en poids et qui se caractérisent en ce qu'elles ne sont pas floculées, en ce que les particules du copolymère ont une dimension moyenne, mesurée en moyenne pondérale à la centrifugeuse à plateau, de 150 à 500 nm, et un indice de polydispersité (polyrépartion ou hétérogénéité dimensionnelle) d'au maximum 1,8, et en ce que moins de 50% en poids des particules ont une dimension supérieure à 1000 nm.

2. Procédé de préparation de dispersions de copolymères selon la revendication 1 par polymérisation en émulsions de :
   a) 1 à 40% en poids d'éthylène avec
   b) 60 à 99% en poids d'un ou de plusieurs comonomères qui sont liquides dans les conditions de la réaction

en milieu aqueux avec un système inducteur radicalaire en présence d'un colloïde protecteur et le cas échéant d'au maximum 50% en poids d'un émulsionnant, par rapport au poids total du colloïde protecteur et de l'émulsionnant, la phase des comonomères étant constituée de :
   b1) 60 à 100% en poids de chlorure de vinyle,
   b2) 0 à 40% en poids de monomères éthyléniques oléosolubles copolymérisables avec les monomères a et b1 et qui n'ont aucun autre groupe fonctionnel réactif dans les conditions réactionnelles en plus de leur double liaison éthylénique, et
   b3) 0 à 10% en poids de monomères éthyléniques et fonctionnels et/ou de monomères polyéthyléniques,

procédé caractérisé en ce que :

I on commence par mettre au préalable dans l'appareil de polymérisation, avec l'eau, le colloïde protecteur et le ou les comonomères, la proportion du colloïde protecteur étant d'au maximum 4% en poids et celle du ou des comonomères d'au maximum 10% en poids, les deux rapportées au poids total du composant b),

II on commence l'addition de la quantité restante du ou des comonomères b au plus tôt au moment du début théoriquement possible de la polymérisation, en entendant par là, dans le cas d'une induction rédox, la présence dans l'appareil des composants réducteur et oxydant du système inducteur, et pour le cas d'une induction thermique le fait d'avoir atteint dans l'appareil, par un chauffage extérieur, une température interne à laquelle la période de l'inducteur est inférieure à 10 heures,

III on commence l'addition supplémentaire du colloïde protecteur et éventuellement celle de l'émulsionnant au plus tôt au moment du début théoriquement possible de la polymérisation et au plus tard 60 minutes après, et

IV on effectue la polymérisation à une pression d'éthylène de 10 à 150 bar (1 à 15 MPa) et à une température de 30 à 100° C.

3. Procédé selon la revendication 2, caractérisé en ce que l'on met aussi au préalable dans l'appareil de 0,1 à 15%, du poids total du composant b), de substances organiques inertes ayant une solubilité dans l'eau de $10^{-3}$ à 200 g/l et une masse moléculaire d'au maximum 1000.

4. Procédé selon la revendication 2 ou 3, caractérisé en ce que l'on ajoute les parties restantes du ou des comonomères, du colloïde protecteur et le cas échéant de l'émulsionnant à mesure de leurs consommations respectives.

5. Procédé selon la revendication 2 ou 4, caractérisé en ce que l'on ajoute le ou les comonomères restants et le colloïde protecteur restant en un mélange préalablement formé.

6. L'emploi des dispersions de copolymères selon la revendication 1 pour en préparer des poudres de dispersion, produits adhésifs pour bois, papier, feuilles de matières plastiques ou cuir, ainsi que comme liants pour textiles et additifs pour du béton.

Fig. 1

Fig. 2

EP 0 224 169 B1

Fig.3

# Fig. 4

# Fig. 5

Fig. 6

Fig. 9

Fig. 1

EP 0 224 169 B1

TEILCHEN KONZENTRATION

122
ppm

0,1    0,24    1,0    10,0

TEILCHEN-DURCHMESSER (µm)

TEILCHEN KONZENTRATION

122
ppm

100
%
80
60
40
20
0

0    2    3,5  4 4,11  6    8    10    12

TEILCHEN-DURCHMESSER (µm)

TEILCHEN-KONZENTRATION

100
%
80
60
40
20
0

0,19   1,86 2    4    6    8

TEILCHEN-DURCHMESSER (µm)

*Fig. 8*